# EUROPEAN PATENT APPLICATION

(11) **EP 1 437 679 A1**
(43) Date of publication of application: **14.07.2004**
(21) Application number: 02258961.8
(22) Date of filing: 24.12.2002
(51) Int. Cl.: G06K 19/02

(54) **Apparatus for cleaning head of surface-contact memory card slot**

(71) Applicant: Taiwan Bor Ying Corporation, Panchiao City, Taipei Hsien 220 (TW)
(72) Inventor: Weng, Jin-Sheng, Taipei 110 (TW)
(74) Representative: Greene, Simon Kenneth

(57) **Abstract**

An apparatus for cleaning head of surface-contact memory card slot mainly includes a base and a sheeted cleaning element spread over an upper and/or a lower side of a front portion of the base. When the base is inserted into the surface-contact memory card slot just like a general memory card, the cleaning element on the base is in contact with and wipes elastic contact plates provided in the head of the memory card slot to thereby clean surfaces of the elastic contact plates.

## Description

### FIELD OF THE INVENTION

The present invention relates to an apparatus for cleaning a head of a surface-contact memory card slot, and more particularly to a cleaning apparatus that is inserted into a surface-contact memory card slot to contact with and thereby effectively wipe clean elastic contact plates provided in a head of the memory card slot.

### BACKGROUND OF THE INVENTION

With the high developments in various technological fields, computerized products, such as personal digital assistant (PDA), MP3, digital camera, portable computer, and many other computer-related products, are now widely used in people's daily life and industrial production. These computerized products all use memory cards to store and read data.

The following are some currently available memory cards:
(1) COMPACT memory card (Compact Flash, CF);
(2) PCMCIA memory card (Personal Computer Memory Card International Association, PC);
(3) SSFDC memory card (Smart Media, SM); and
(4) SONY memory card (Memory Stick, MS).

The above-mentioned memory cards may be generally divided into two types according to the manner in which the memory card contacts with a head in a memory card slot. The CF and PC memory cards are of pin-contact memory cards, while the SM and MS memory cards are of surface-contact memory cards. The pin-contact memory card has a contact section at where a 50-hole or a 68-hole female connector is provided. The pin-contact memory card is designed to plug in a machine at a memory card slot thereof. A head in the memory card slot for reading data is provided at a portion contacting with the plugged memory card with a 50-pin or 68-pin male connector, which engages with the 50-hole or 68-hole female connector and thereby enables reading and/or storing of data from or on the memory card. On the other hand, the surface-contact memory card has a contact section provided at a front end of one side thereof. The contact section includes a plurality of spaced contact areas. The surface-contact memory card is designed to plug in a machine at a memory card slot thereof. A head in the memory card slot for reading data is provided at a portion contacting with the plugged memory card with a plurality of elastic contact plates corresponding to the contact areas on the memory card. When the contact areas of the memory card are engaged with the elastic contact plates of the memory card slot, into which the memory card is plugged, data on the memory card could be read and/or stored.

When the memory card slot has been used for a long time, the elastic contact plates provided in the head of the surface-contact memory card slot tend to rust, become dirty, or have foreign matters attached thereto to result in poor reading and/or storing of data. Since such elastic contact plates are usually invisibly located at an inner side of the machine using the memory card, and are very closely arranged side by side, it is difficult to effectively clean contact areas on the elastic contact plates in a simple and convenient manner. Therefore; it is common for many users to constantly encounter the problem of poor reading and/or storing of data resulted from the dirty elastic contact plates in the memory card slot.

### SUMMARY OF THE INVENTION

A primary object of the present invention is to provide an apparatus for cleaning head of surface-contact memory card slot. The cleaning apparatus mainly includes a base and a sheeted cleaning element spread over an upper and/or a lower side of a front portion of the base. When the base is plugged in a surface-contact memory card slot just like a memory card, the cleaning element on the base is in contact with elastic contact plates provided in the head of the memory card slot. Such contact of the cleaning element with the elastic contact plates enables the cleaning element to wipe clean surfaces of the elastic contact plates.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a top perspective view of an apparatus' for cleaning head of surface-contact memory card slot according to an embodiment of the present invention;
Fig. 2 is a sectioned side view of Fig. 1; and
Fig. 3 is a sectional view showing the use of the present invention.

### DETAILED DESCRIPTION OF THE PREFERRED EMBODIMENTS

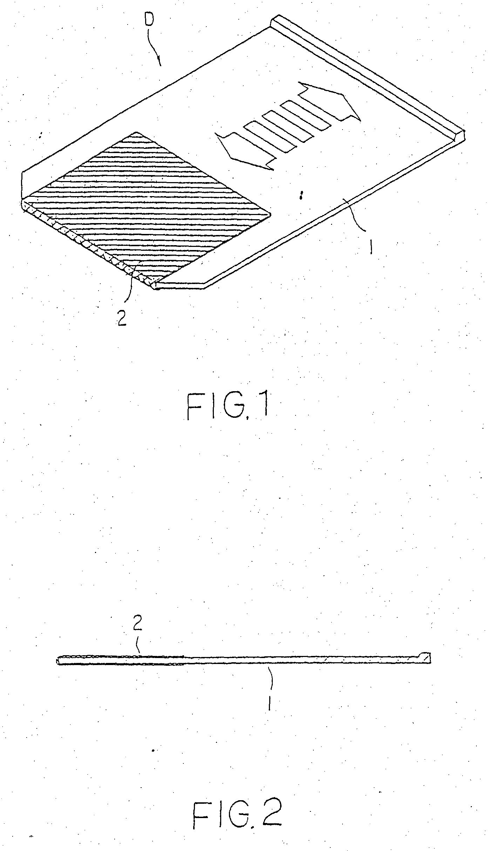

Please refer to Fig. 1 that is a top perspective view of an apparatus for cleaning head of surface-contact memory card slot according to an embodiment of the present invention, and to Fig. 2 that is a sectioned side view of Fig. 1. As shown, the cleaning apparatus D of the present invention includes a base 1 having a shape and dimensions similar to those of a general memory card, and a sheeted cleaning element 2 that may be made of a paper-based material, a cloth-based material, or a foamed material. The cleaning element 2 is spread over an upper and/or a lower side of a front portion of the base 1. That is, the cleaning element 2 is provided on the base 1 at positions that correspond to contact areas provided on a general memory card.

There are many feasible ways for spreading and attaching the cleaning element 2 to the upper and/or the lower side of the front portion of the base 1. One of the simplest ways is to bond the cleaning element 2 to the base 1 with a bonding material.

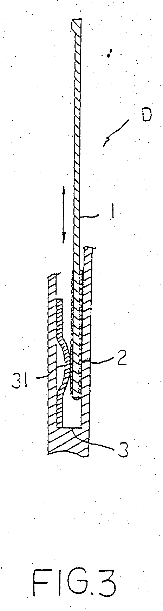

Please refer to Fig. 3 that shows the manner of using the cleaning apparatus D of the present invention. The cleaning apparatus D is used just like a general memory. card by inserting it into a head 3 of a surface-contact memory card slot. At this point , a portion of the cleaning element 2 at the upper side of the base 1 is in frictional contact with elastic contact plates 31 provided in the head 3 to rub and wipe the elastic contact plates 31. With the cleaning element 2, foreign matters, dirt, etc. attached to surfaces of the elastic contact plates 31 are synchronously and completely wiped off to achieve highly effective cleaning of the head 3 of the memory card slot.

## Claims

1. An apparatus for cleaning head of surface-contact memory card slot, comprising:
a base having a shape and dimensions similar to those of a general memory card; and
a sheeted cleaning element being spread and attached to an upper and/or a lower side of a front portion of said base.

2. The apparatus for cleaning head of surface-contact memory card slot as claimed in claim 1, wherein said cleaning element is made of a paper-based material.

3. The apparatus for cleaning head of surface-contact memory card slot as claimed in claim 1, wherein said cleaning element is made of a cloth-based material.

4. The apparatus for cleaning head of surface-contact memory card slot as claimed in claim 1, wherein said cleaning element is made of a foamed material.

5. The apparatus for cleaning head of surface-contact memory card slot as claimed in claim 1, wherein said cleaning element is attached to the upper and/or the lower side of the front portion of said base by means of a bonding material.
